# EUROPÄISCHE PATENTSCHRIFT

(11) **EP 2 314 858 B1**
(45) Veröffentlichungstag und Bekanntmachung des Hinweises auf die Patenterteilung: **05.03.2014**
(21) Anmeldenummer: 10186927.9
(22) Anmeldetag: 08.10.2010
(51) Int. Cl.: F02M 35/12, F02M 35/10, B29C 45/14, B29C 45/16

(54) **Verfahren zur Herstellung eines Ansaugluftkanals mit Akustik-Kanalabschnitt**
Method for producing a suction air channel with acoustic channel section
Procédé de fabrication d'un canal d'air d'aspiration doté d'une section de canal acoustique

(30) Priorität: 21.10.2009 DE 102009050256
(43) Veröffentlichungstag der Anmeldung: 27.04.2011
(73) Patentinhaber: MANN+HUMMEL GmbH, 71638 Ludwigsburg (DE)
(72) Erfinder: Tschech, Thomas, 71672 Marbach (DE); Bauer, Sascha, 71549 Auenwald (DE)

(56) Entgegenhaltungen:
- DE-A1-102004 014 314
- DE-A1-102007 039 048
- JP-A- 2001 012 324
- US-A1- 2004 187 826

## Beschreibung

### Technisches Gebiet

Die Erfindung betrifft ein Verfahren zur Herstellung eines Ansaugluftkanals mit Akustik-Kanalabschnitt, insbesondere für eine Brennkraftmaschine eines Kraftfahrzeuges.

### Stand der Technik

Brennkraftmaschinen, insbesondere von Kraftfahrzeugen, werden über einen Ansaugluftkanal mit Verbrennungsluft versorgt. Der durch den Ansaugluftkanal hindurchtretende Luftstrom erzeugt Ansauggeräusche, die durch Wirbelbildungen und insbesondere durch Pulsationen infolge der Steuerzeiten der Hubkolbenmaschine hervorgerufen werden. Unter bestimmten Betriebsbedingungen können diese Ansauggeräusche in Frequenz und/oder Lautstärke unerwünscht sein.

Zur Vermeidung, Veränderung bzw. Anpassung der Ansauggeräusche sind verschiedene Vorrichtungen bekannt, die mit Dämpfungs- bzw. Resonanzmaßnahmen oder dergleichen den Ansaugluftstrom derart beeinflussen, dass sich ein gewünschtes Frequenzspektrum bzw. Lautstärkenband einstellt. Vorbekannte Anordnungen sind aufwendig und kostenintensiv und daher relativ unwirtschaftlich in der Herstellung. Darüber hinaus erfordern sie einigen Bauraum, der bei modernen Kraftfahrzeugen mit zahlreichen Zusatzaggregaten im Motorraum nicht immer zur Verfügung steht.

Aus der DE 10 2004 014 314 A1 ist eine Ansaugvorrichtung mit einem Akustik-Kanalabschnitt bekannt, der luftundurchlässige Wandbereiche sowie poröse Dämpfungswandsegmente aufweist. Schallwellen des Ansaugluftstroms treten durch die porösen Segmente hindurch und werden dabei gedämpft. Die Dämpfungswandsegmente werden als Einzelteile gefertigt und in Nuten oder dergleichen der undurchlässigen Wandbereiche eingesetzt und fixiert. Die Schalldämpfungswirkung ist zwar gut, der Fertigungsaufwand jedoch hoch. Insbesondere sind die Möglichkeiten zur geometrischen Anpassung der Dämpfungswandsegmente an die Schallgegebenheiten begrenzt, da ihre mechanische Belastung insbesondere an den Befestigungskanten berücksichtigt werden muss.

Die DE 10 2007 039 048 A1 offenbart ein Verfahren zur Herstellung eines Akustik-Kanalabschnitts mit luftundurchlässigen Wandbereichen und mindestens einem porösen Dämpfungswandelement, insbesondere für eine Brennkraftmaschine eines Kraftfahrzeuges. Der Akustik-Kanalabschnitt wird dabei aus Kunststoff extrudiert. Definitionsgemäß wird auf dem Gebiet der Kunststofftechnik unter Extrusion das kontinuierliche Aufschmelzen von Kunststoff-Formmassen und das Austragen durch eine formgebende Düse (Extrusionswerkzeug) verstanden. Als Kunststoffe werden Thermoplaste oder Thermoelaste, wie z.B. Polyvinylchlorid (PVC) oder Polypropylen (PP) eingesetzt. Das mindestens eine poröse Dämpfungswandsegment wird gemäß der DE 10 2007 039 048 A1 während des Extrudierens in eine Schmelze des Akustik-Kanalabschnitts eingebracht und dabei unter Bildung der luftundurchlässigen Wandbereiche zwischen diese einextrudiert. Nachteilig hieran ist jedoch, dass der Fertigungsaufwand noch immer relativ hoch ist, da der Fixieraufwand der einzelnen Zuführteile (Dämpfungswandsegmente) aufwändig und die Gefahr einer Beschädigung sehr hoch ist.

### Offenbarung der Erfindung

Es ist daher eine Aufgabe der vorliegenden Erfindung, ein Verfahren zur Herstellung eines Akustik-Kanalabschnitts eines Ansaugluftkanals, insbesondere für eine Brennkraftmaschine eines Kraftfahrzeuges, bereit zu stellen, das die vorgenannten Nachteile des Standes der Technik vermeidet.

Diese und weitere Aufgaben werden durch das Verfahren nach Anspruch 1 gelöst.

Vorteilhafte Ausführungsformen der Erfindung sind in den Unteransprüchen dargelegt.

### Kurze Beschreibung der Zeichnungen

Ausführungsbeispiele der Erfindung sind nachfolgend anhand der Zeichnung näher beschrieben. Es zeigen:

Fig. 1 eine schematische Längsschnittdarstellung eines Extruders zum Extrudieren eines Akustik-Kanalabschnitts nach dem Stand der Technik;

Fig. 2 eine schematische Schnittdarstellung eines Extruders zur Durchführung des erfindungsgemäßen Verfahrens; und

Fig. 3 einen Schnitt durch einen erfindungsgemäß hergestellten Ansaugkanal.

### Ausführungsform(en) der Erfindung

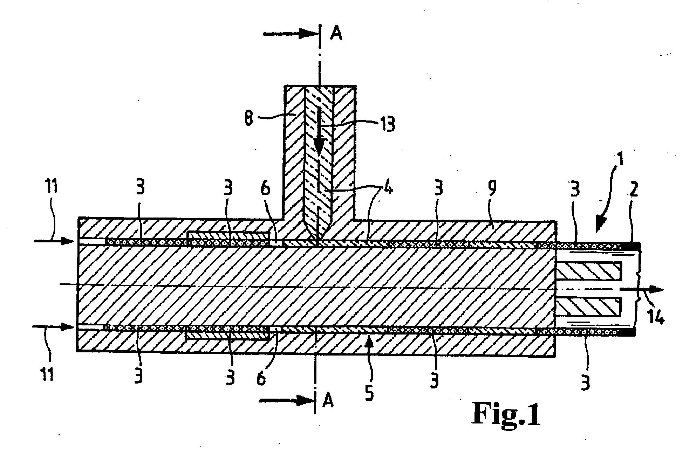

Fig. 1 zeigt eine schematische Längsschnittdarstellung eines Extruders 8 mit einem Querspritzkopf 9 (Querkopfextruder). Im Querspritzkopf 9 ist eine Ringform 5 eingeformt, in die eine Kunststoffschmelze 4 entsprechend einem Pfeil 13 mittels des Extruders 8 eingebracht wird. Die Ringform 5 entspricht in ihrer geometrischen Ausgestaltung der gewünschten Querschnittsform des Akustik-Kanalabschnitts 1. Die Schmelze 4 erstarrt in der Ringform 5 und wird durch den Druck der nachgeführten Schmelze 4 als endloser Rohling des Akustik-Kanalabschnitts 1 entsprechend einem Pfeil 14 aus der Ringform 5 herausgedrückt. Die Schmelze 4 besteht aus einem thermoplastischen KunststoffMaterial, bevorzugt aus Polypropylen und im gezeigten Ausführungsbeispiel aus PPTX20, wodurch die luftundurchlässigen Wandbereiche 2 des gestrichelt angedeuteten Akustik-Kanalabschnitts 1 gebildet werden.

Dem Austritt des Akustik-Kanalabschnitts 1 gegenüberliegend sind Zuführkanäle 6 angeordnet, die achsparallel in die Ringform 5 münden. Die Anzahl der Zuführkanäle 6 entspricht der Anzahl der einzubringenden Dämpfungswandsegmente.

Nach Fig. 1 werden die einzelnen Dämpfungswandsegmente 3 als poröse Kunststoffsinterteile insbesondere aus Polyethylen (PE), Polypropylen (PP) oder Polyamid (PA) in nicht dargestellter Weise fertig vorbereitet und als Festkörper in die zugeordneten Zuführkanäle 6 entsprechend den Pfeilen 11 eingeführt. Über Schieber oder andere geeignete Mittel werden die vorbereiteten Dämpfungswandsegmente 3 durch die Zuführkanäle 6 in die Ringform 5 hineingeschoben. Dort werden sie von der Schmelze 4 erfasst und mit dieser entsprechend dem Pfeil 14 durch die Ringform 5 hindurch fortgetragen. Durch gesteuerten Vorschub beim Nachführen der Dämpfungswandsegmente 3 entsprechend den Pfeilen 11 können diese mit zeitlichem Abstand und in der Folge auch mit räumlichem Abstand in die Schmelze 4 hineingedrückt werden, so dass sich der gewünschte Abstand zueinander in der Längsrichtung einstellt. Bei Eintritt der Dämpfungswandsegmente 3 in die Ringform 5 werden diese von der Schmelze 4 an ihren Umfangskanten umschlossen. Stromab davon erstarrt die Schmelze 4 durch Abkühlung, in dessen Folge die einzelnen Dämpfungswandsegmente 3 in das Kunststoffmaterial der undurchlässigen Wandbereiche 2 einextrudiert sind. Die von den einzelnen Dämpfungswandsegmenten 3 verdrängte Schmelze 4 bildet dabei die luftundurchlässigen Wandbereiche 2.

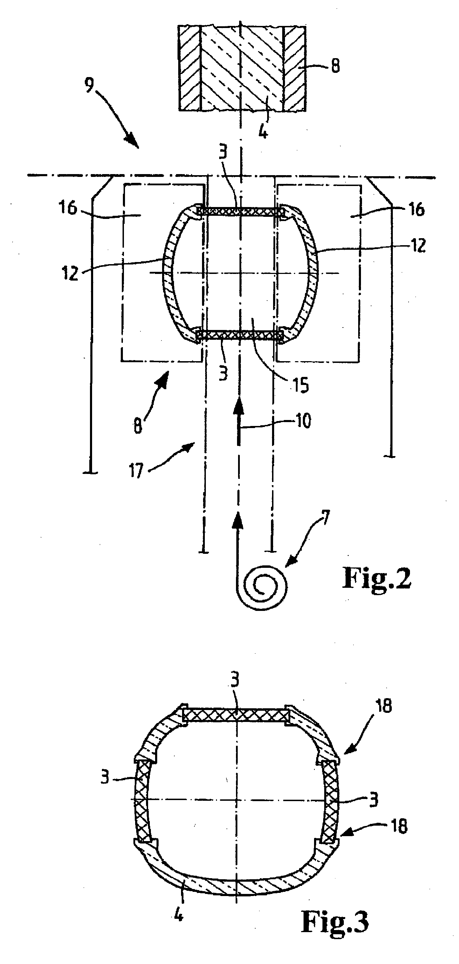

Fig. 2 zeigt eine Schnittansicht entlang der Linie A-A in Fig. 1. Zur Durchführung des erfindungsgemäßen Verfahrens wird der Querspritzkopf 9 mit mindestens einem porösen Kunststoffstreifen (Dämpfungswandsegment 3), bspw. aus PP oder PA, beschickt. Die Porosität der Dämpfungswandsegmente 3 liegt im Bereich von 10 bis 50 µm, vorzugsweise bei 30 µm. Die Beschickung erfolgt in Längsrichtung (Pfeil 10) durch den Querkopfextruder 8. Dabei können die Dämpfungswandsegmente 3 entweder durchgehend von einer Spule 7 (coil) abgewickelt oder in Form von einzelnen Längsplatten (nicht gezeigt) zugeführt werden. Hierbei ist es auch möglich, die porösen Streifen aus einem entsprechenden Granulatpulver in einer dem Extruder vorgeschalteten "Heiz-Back-Stufe" unmittelbar selbst herzustellen.

Innerhalb des Querspritzkopfes 9 wird nun von der Seite eine Kunststoff-Schmelze, z.B. aus PP oder PA, an den Randbereich des den Spritzkopf durchlaufenden Dämpfungswandsegments 3 zugeführt, wobei die Schmelze vorzugsweise so geformt ist, dass sie zwei im Wesentlichen luftundurchlässige Leitungsteilschalen 12 ausbildet. Erfindungsgemäß wird nun innerhalb des Querspritzkopfes 9 eine thermische Trennung zwischen dem Bereich, in dem die Dämpfungswandsegmente 3 zugeführt werden, und dem Bereich, in dem die Leitungsteilschalen 12 ausgebildet werden, vorgenommen. Dies bedeutet, dass Bereiche unterschiedlicher Temperatur ausgebildet werden, wobei der Bereich 15 der Zuführung der porösen Dämpfungswandsegmente 3 ("kalter" Bereich) eine geringere Temperatur aufweist als der Bereich 16, in dem die Leitungsteilschalen 12 ausgebildet werden ("warmer" Bereich). Die Temperatur des "warmen" Bereichs liegt dabei je nach verwendetem Material ungefähr im Bereich von 140°C (bei Verwendung von PE) bis 250°C (bei Verwendung von PA), vorzugsweise bei 190°C (bei Verwendung von PP), und die Temperatur des "kalten" Bereichs liegt ungefähr im Bereich von 40°C bis 80°C, abhängig vom verwendeten Material. Durch die thermische Aufteilung in mindestens zwei Bereiche können Dämpfungswandsegmente 3 in den Querspritzkopf 9 eingeführt werden, die annähernd den gleichen Schmelzpunkt haben wie das Extrusionsmaterial (Leitungshalbschalen 12). Es können weitere Rohrseiten mit Dämpfungswandsegmenten 3 ausgeführt und zusätzlich mit unterschiedlichen Materialien bestückt werden. Dies ist insbesondere bei großen Rohrdurchmessern vorteilhaft.

Durch die erfindungsgemäßen Kühlungsbereiche wird das Dämpfungssegment kühler gehalten und am Übergang verschmelzt.

Die oben genannte thermische Trennung kann dadurch realisiert werden, dass das mindestens eine zugeführte Dämpfungswandsegment 3 auf der Zuführung 17 zum Querspritzkopf 9 durch entsprechende Kühlmittel wie bspw. Kaltluft oder Stickstoff gekühlt wird, wobei die Kühlung bspw. durch Anblasen in der Tunnelzufuhr realisierbar ist. Eine andere Möglichkeit besteht darin, den Querspritzkopf 9 so auszugestalten, dass er Temperiereinrichtungen zum Heizen bzw. Kühlen aufweist, wie es bspw. in der DE 198 23 304 A1 beschrieben ist.

Die seitliche Zuführung der Kunststoff-Schmelze zur Ausbildung der luftundurchlässigen Teile des Produkts wird dabei so ausgeführt, dass die Schmelze lediglich die Randbereiche der porösen Streifen erfasst. Dies geschieht dadurch, dass die genannten Randbereiche zwischen 0,5 und 4 mm, bevorzugt ca. 3 mm in den "warmen" Bereich des Querspritzkopfes 9 und damit in die Schmelze hineinragen. In diesem Randbereich verschmelzen dann die porösen Streifen mit der Kunststoff-Schmelze. Fig. 3 zeigt einen Schnitt durch einen erfindungsgemäß hergestellten Ansaugkanal mit den Dämpfungswandsegmenten 3, die in ihrem Randbereich 18 von der Kunststoff-Schmelze 4 umfasst werden. Im erstarrten Zustand bildet die Kunststoff-Schmelze 4 die Leitungsschalen 12 des Akustik-Kanalabschnittes des Ansaugluftkanals.

Nach dem Verschmelzen wird der extrudierte Rohrkörper mit den darin integrierten porösen Dämpfungswandsegmenten 3 aus dem Querspritzkopf 9 bzw. der Extrusionsdüse 8 ausgeschoben, woraufhin bedarfsabhängig ein Längenzuschnitt nach der Kalibrierung erfolgt.

Ein großer Vorteil des vorgeschlagenen Verfahrens besteht darin, dass die zugeführten porösen Teile lediglich an definierten Übergangsbereichen schmelzen. Somit findet an diesen Übergangsbereichen eine Verbindung der zugeführten Teile und des Extrusionsmaterials (Leitungshalbschalen) statt. Folglich bleibt das sich im "kalten" Bereich des Querspritzkopfes 9 befindliche zugeführte Teil formstabil und wird im Kalibrierungsbereich anschließend ebenfalls formstabil mit dem restlichen Extrusionsmaterial geformt. Dadurch ist es bspw. möglich, auch poröse PP-Platten einextrudiert werden. Die Zuführung poröser PP-Platten kann ebenfalls im Coil-Format erfolgen. Zudem können die zugeführten PP-Platten auch eine wasserabweisende Funktion haben, womit ein Eindringen von Wasser in die Luftführung gehemmt wird.

Der erfindungsgemäß hergestellte Ansaugluftkanal mit Akustik-Kanalabschnitt kann insbesondere für eine Brennkraftmaschine eines Kraftfahrzeuges, aber auch für Stationärmotoren verwendet werden.

## Patentansprüche

1. Verfahren zur Herstellung eines Akustik-Kanalabschnitts eines Ansaugluftkanals, insbesondere für eine Brennkraftmaschine eines Kraftfahrzeuges, wobei der Akustik-Kanalabschnitt luftundurchlässige Wandbereiche (2) und mindestens ein poröses Dämpfungswandsegment (3) aufweist, wobei der Akustik-Kanalabschnitt aus Kunststoff mittels eines Extrusionswerkzeuges (8, 9) extrudiert wird, und wobei das mindestens eine poröse Dämpfungswandsegment (3) während des Extrudierens zumindest teilweise in eine Schmelze (4) des Akustik-Kanalabschnitts eingebracht wird und dabei unter Bildung der luftundurchlässigen Wandbereiche (2) zwischen diese einextrudiert wird, **dadurch gekennzeichnet, dass** innerhalb des Extrusionswerkzeuges (8, 9) eine thermische Trennung in Bereiche unterschiedlicher Temperatur zwischen einem Bereich (15), in dem das mindestens eine poröse Dämpfungswandsegment (3) zugeführt wird, und einem Bereich (16), in dem die luftundurchlässigen Wandbereiche (2) des Akustik-Kanalabschnitts ausgebildet werden, vorgenommen wird, wobei der Bereich (15), in dem das mindestens eine poröse Dämpfungswandsegment (3) eingebracht wird, eine niedrigere Temperatur aufweist als der Bereich (16), in dem die luftundurchlässigen Wandbereiche (2) aus der Schmelze (4) ausgebildet werden.

2. Verfahren nach Anspruch 1, **dadurch gekennzeichnet, dass** die thermische Trennung durch eine Kühlung der einzubringenden porösen Dämpfungswandsegmente (3) erreicht wird.

3. Verfahren nach Anspruch 1, **dadurch gekennzeichnet, dass** die thermische Trennung durch Kühlkanäle im entsprechenden kühleren Bereich ausgeführt wird.

4. Verfahren nach Anspruch 1, **dadurch gekennzeichnet, dass** die thermische Trennung durch Temperiereinrichtungen zum Heizen und Kühlen der entsprechenden Bereiche erreicht wird.

5. Verfahren nach einem der Ansprüche 1 bis 4, **dadurch gekennzeichnet, dass** das mindestens eine poröse Dämpfungswandsegment (3) beim Einbringen in die Schmelze (4) lediglich in seinen Randbereichen (18) mit dieser überlappt.

6. Verfahren nach Anspruch 5, **dadurch gekennzeichnet, dass** das mindestens eine poröse Dämpfungswandsegment (3) beim Einbringen in die Schmelze (4) lediglich an seinen Randbereichen (18) aufgeschmolzen wird, wodurch an den Randbereichen (18) eine Verbindung zwischen porösem Dämpfungswandsegment (3) und dem Akustik-Kanalabschnitt entsteht.

7. Verfahren nach einem der vorhergehenden Ansprüche, **dadurch gekennzeichnet, dass** die Extrusion mittels eines Extruders (8) mit einem Querspritzkopf (9) erfolgt.

8. Verfahren nach einem der vorhergehenden Ansprüche, **dadurch gekennzeichnet, dass** das mindestens eine poröse Dämpfungswandsegment (3) durchgehend von einer Spule (7) zugeführt wird.

9. Verfahren nach einem der Ansprüche 1 bis 7, **dadurch gekennzeichnet, dass** das mindestens eine poröse Dämpfungswandsegment (3) in Plattenform zugeführt wird.

10. Verfahren nach einem der vorstehenden Ansprüche, **dadurch gekennzeichnet, dass** das mindestens eine Dämpfungswandsegment (3) ein Kunststoffsinterteil insbesondere aus Polyethylen (PE), Polypropylen (PP) oder Polyamid (PA) ist.

11. Verfahren nach einem der vorstehenden Ansprüche, **dadurch gekennzeichnet, dass** die luftundurchlässigen Wandbereiche (2) aus einem thermoplastischen Kunststoff, bevorzugt aus Polypropylen (PP), und insbesondere aus PP TX 20 extrudiert werden.

12. Verfahren nach einem der vorstehenden Ansprüche, **dadurch gekennzeichnet, dass** das mindestens eine Dämpfungswandsegment (3) aus einem Granulatpulver mittels einer dem Extrusionsvorgang vorgeschalteten Heiz-Back-Stufe hergestellt wird.

13. Verfahren nach Anspruch 1 zur Herstellung eines Ansaugluftkanals für eine Brennkraftmaschine eines Kraftfahrzeuges oder für Stationärmotoren.

## Claims

1. Method for manufacturing an acoustic channel section of an intake air channel, in particular for an internal combustion engine of a motor vehicle, the acoustic channel section featuring air-impermeable wall segments (2) and at least one porous damping wall segment (3), the acoustic channel section made of synthetic material being extruded by means of an extrusion die (8, 9), and the at least one porous damping wall segment (3) being introduced at least partially into a melt (4) of the acoustic channel section during the extrusion and, by doing so, being extruded therebetween, by forming the air-impermeable wall segments (2), **characterized in that** within the extrusion die (8, 9) a thermal separation in areas of different temperature between an area (15), where the at least one porous damping wall segment (3) is fed, and an area (16), where the air-impermeable wall segments (2) of the acoustic channel section are formed, is realized, the area (15), into which the at least one porous damping wall segment (3) is introduced, featuring a lower temperature then the area (16), where the air-impermeable wall segments (2) are formed from the melt (4).

2. Method according to claim 1, **characterized in that** the thermal separation is obtained by cooling the porous damping wall segments (3) to be introduced.

3. Method according to claim 1, **characterized in that** the thermal separation is realized by cooling channels in the correspondingly cooler area.

4. Method according to claim 1, **characterized in that** the thermal separation is realized by temperature control devices for heating and cooling of the corresponding areas.

5. Method according to one of the claims 1 to 4, **characterized in that** the at least one porous damping wall segment (3), when introduced into the melt (4), overlaps only in its peripheral areas (18) with this melt.

6. Method according to claim 5, **characterized in that** the at least one porous damping wall segment (3), when introduced into the melt (4), is only melted at its peripheral areas (18) so that a connection is formed at the peripheral areas (18) between the porous damping wall segment (3) and the acoustic channel section.

7. Method according to one of the above claims, **characterized in that** the extrusion is realized by means of an extruder (8) having a cross head (9).

8. Method according to one of the above claims, **characterized in that** the at least one porous damping wall segment (3) is continuously fed from a coil (7).

9. Method according to one of the claims 1 to 7, **characterized in that** the at least one porous damping wall segment (3) is fed in plate-shaped design.

10. Method according to one of the above claims, **characterized in that** the at least one damping wall segment (3) is a plastic sintered part, in particular made of polyethylene (PE), polypropylene (PP) or polyamide (PA).

11. Method according to one of the above claims, **characterized in that** the air-impermeable wall segments (2) are extruded from thermoplastics, preferably from polypropylene (PP), and in particular from PP TX 20.

12. Method according to one of the above claims, **characterized in that** the at least one damping wall segment (3) is made of a granular powder by means of a heating phase and a baking phase preceding the extrusion process.

13. Method according to claim 1 for manufacturing an intake air channel for an internal combustion engine of a motor vehicle or for stationary engines.

## Revendications

1. Procédé de fabrication d'une section de canal acoustique d'un canal d'air d'aspiration, notamment pour un moteur à combustion interne d'un véhicule automobile, la section de canal acoustique présentant des zones de paroi imperméables à l'air (2) et au moins un segment poreux de paroi d'insonorisation (3), la section de canal acoustique en matière plastique étant extrudée au moyen d'un outil d'extrusion (8, 9) et le segment poreux de paroi d'insonorisation (3), au moins au nombre d'un, étant introduit, pendant l'extrusion, au moins partiellement, dans une fonte (4) de la section de canal acoustique et, ce faisant, étant extrudé, par formation des zones de paroi imperméables à l'air (2), entre lesdites zones, **caractérisé en ce qu'**il est effectué, à l'intérieur de l'outil d'extrusion (8, 9), une séparation thermique dans des zones à des températures différentes entre une zone (15) dans laquelle le segment poreux de paroi d'insonorisation (3), au moins au nombre d'un, est amené et une zone (16) dans laquelle les zones de paroi imperméables à l'air (2) de la section de canal acoustique sont formées, la zone (15) dans laquelle le segment poreux de paroi d'insonorisation (3), au moins au nombre d'un, est introduit présentant une température plus basse que la zone (16) dans laquelle les zones de paroi imperméables à l'air (2) sont formées depuis la fonte (4).

2. Procédé selon la revendication 1, **caractérisé en ce que** la séparation thermique est obtenue par un refroidissement des segments poreux de paroi d'insonorisation (3) devant être introduits.

3. Procédé selon la revendication 1, **caractérisé en ce que** la séparation thermique est exécutée par des canaux de refroidissement dans la zone plus fraîche correspondante.

4. Procédé selon la revendication 1, **caractérisé en ce que** la séparation thermique est obtenue au moyen de dispositifs de thermorégulation permettant de chauffer et de refroidir les zones correspondantes.

5. Procédé selon l'une des revendications 1 à 4, **caractérisé en ce que** le segment poreux de paroi d'insonorisation (3), au moins au nombre d'un, chevauche la fonte (4) uniquement au niveau de ses bords (18) lorsqu'il est introduit dans ladite fonte.

6. Procédé selon la revendication 5, **caractérisé en ce que** le segment poreux de paroi d'insonorisation (3), au moins au nombre d'un, fond uniquement au niveau de ses bords (18) lorsqu'il est introduit dans la fonte (4), ce qui génère au niveau des bords (18) une liaison entre le segment poreux de paroi d'insonorisation (3) et la section de canal acoustique.

7. Procédé selon l'une des revendications précédentes, **caractérisé en ce que** l'extrusion est réalisée au moyen d'une extrudeuse (8) dotée d'une tête d'équerre (9).

8. Procédé selon l'une des revendications précédentes, **caractérisé en ce que** le segment poreux de paroi d'insonorisation (3), au moins au nombre d'un, est amené en continu par une bobine (7).

9. Procédé selon l'une des revendications 1 à 7, **caractérisé en ce que** le segment poreux de paroi d'insonorisation (3), au moins au nombre d'un, est amené sous forme de plaque.

10. Procédé selon l'une des revendications précédentes, **caractérisé en ce que** le segment poreux de paroi d'insonorisation (3), au moins au nombre d'un, est une pièce frittée en matière plastique, en particulier en polyéthylène (PE), polypropylène (PP) ou polyamide (PA).

11. Procédé selon l'une des revendications précédentes, **caractérisé en ce que** les zones de paroi imperméables à l'air (2) sont extrudées à partir d'une matière thermoplastique, de préférence à partir de polypropylène (PP), et plus précisément de PP TX 20.

12. Procédé selon l'une des revendications précédentes, **caractérisé en ce que** le segment poreux de paroi d'insonorisation (3), au moins au nombre d'un, est fabriqué à partir d'une poudre granulée lors d'une phase de chauffage et une phase de cuisson précédant la procédure d'extrusion.

13. Procédé selon la revendication 1 pour la fabrication d'un canal d'air d'aspiration pour un moteur à combustion interne d'un véhicule automobile ou pour des moteurs stationnaires.
